# EUROPÄISCHE PATENTSCHRIFT

(11) **EP 0 591 142 B1**
(45) Veröffentlichungstag und Bekanntmachung des Hinweises auf die Patenterteilung: **24.01.1996**
(21) Anmeldenummer: 90914902.3
(22) Anmeldetag: 11.10.1990
(51) Int. Cl.: B60N 2/44

(54) **KRAFTFAHRZEUGSITZ**
CAR SEAT
SIEGE DE VOITURE

(30) Priorität: 10.11.1989 DE 3937480
(43) Veröffentlichungstag der Anmeldung: 13.04.1994
(73) Patentinhaber: MAHLKOW, Gerhard, D-69214 Eppelheim (DE)
(72) Erfinder: MAHLKOW, Gerhard, D-69214 Eppelheim (DE)
(74) Vertreter: Naumann, Ulrich, Dr.-Ing.
(86) Internationale Anmeldenummer: DE9000772
(87) Internationale Veröffentlichungsnummer: WO9107294

(56) Entgegenhaltungen:
- AU-A- 571 274
- DE-A- 3 937 480
- PATENT ABSTRACTS OF JAPAN vol. 7, no. 59 (M-199)(1204) 11 März 1983, & JP-A-57 205 238 (TACHIKWA) 16. März 1982
- PATENT ABSTRACTS OF JAPAN vol. 6, no. 253 (M-178)() 11 Dezember 1982, & JP-A-57 147 931 (IKEDA) 13. September 1982

## Beschreibung

Die Erfindung betrifft einen Kraftfahrzeugsitz mit einem Sitzgestell, wobei das Sitzgestell vorzugsweise gepolstert ist und eine Sitzfläche sowie eine Rückenlehne bildet.

Kraftfahrzeugsitze sind in den unterschiedlichsten Ausführungsformen seit Jahrzehnten bekannt. Weiterentwicklungen der letzten Jahre haben sich stets auf den Sitzkomfort bzw. die Verstellbarkeit der Kraftfahrzeugsitze konzentriert. Dabei wurde bislang völlig außer acht gelassen, daß freie Sitze in einem Kraftfahrzeug in aller Regel als Ablage für die unterschiedlichsten Gegenstände dienen. Von kleinen Gegenständen über Handtaschen, Aktentaschen, Fotoapparate, Reiseschreibmaschinen, Laptops, bis hin zu sperrigen Kisten wird so ziemlich alles insbesondere auf dem Beifahrersitz abgelegt. Vor allem bei zweitürigen Kraftfahrzeugen ist der Beifahrersitz einfach zugänglich, so daß dieser in besonderem Maße als Ablage zweckentfremdet wird.

Die auf dem Beifahrersitz, aber auch auf den Rücksitzen abgelegten Gegenstände stellen jedoch im Fahrbetrieb des Kraftfahrzeugs ein erhebliches Unfallrisiko dar. Bei Kurvenfahrt, starkem Bremsen oder starker Beschleunigung rutschen die auf dem Kraftfahrzeugsitz abgelegten Gegenstände von der Sitzfläche, wodurch der Fahrer des Kraftfahrzeugs stets abgelenkt wird. Einerseits wird er ständig versuchen, die Gegenstände in ihrer Position zu halten, andererseits können schwere Gegenstände sogar zu einer Behinderung beim Fahren führen. Fallen kleinere Gegenstände in den Fußraum des Fahrers, so könnten sich diese beispielsweise unter eines der Pedale verirren, was im Falle des Bremspedals verheerende Folgen haben könnte. Schließlich besteht stets die Gefahr, daß von dem Fahrzeugsitz heruntergeschleuderte scharfkantige Gegenstände die Inneneinrichtung des Kraftfahrzeugs beschädigen.

Aus der JP-A-57-147931 ist für sich ein Kraftfahrzeugsitz mit einer Stützvorrichtung für die Oberschenkel bekannt. Diese Stützvorrichtung ist in dem in Fahrtrichtung gesehen vorderen Bereich der Sitzfläche angebracht und aus einer Ruhestellung in etwa der Ebene der Sitzflache in eine Arbeitsstellung von der Sitzfläche aus schräg nach oben abragend verbringbar und dort feststellbar. Diese bekannte Stützvorrichtung kann allenfalls derart geneigt werden, daß sie die Oberschenkel abstützt, daß also ein angenehmes Sitzen möglich ist. Einen sicheren Schutz gegen Herunterrutschen von Gegenständen jeglicher Art stellt diese Vorrichtung jedenfalls nicht dar.

Des weiteren ist aus der JP-A-57-205238 ein Kraftfahrzeugsitz mit aufblasbaren Luftkissen bekannt, die sowohl entlang der seitlichen Bereiche der Sitzflächen als auch im unteren Bereich der Rückenlehne angeordnet und in die Polsterung integriert sind. Diese Luftkissen dienen einerseits der Abstützung der Schenkel, andererseits der Anpassung an den Körper des Sitzenden im Sinne eines Schalensitzes. Auch hier ist stets ein bequemes Sitzen gewährleistet, so daß diese Luftkissen keinen sicheren Schutz vor dem Herunterrutschen von Gegenständen jeglicher Art darstellen können.

Der Erfindung liegt daher die Aufgabe zugrunde, den seit Jahrzehnten bekannten Kraftfahrzeugsitz so auszugestalten und weiterzubilden, daß darauf Gegenstände jeglicher Art sicher, d.h. gegen Herunterrutschen gesichert, abgelegt werden können.

Der erfindungsgemäße Kraftfahrzeugsitz löst die voranstehende Aufgabe durch die Merkmale des Schutzanspruches 1. Danach ist bei dem eingangs genannten Kraftfahrzeugsitz zumindest der Sitzfläche eine Haltevorrichtung zur Verhinderung des Herabfallens bzw. Herunterrutschens darauf abgelegter Gegenstände zugeordnet. Die Haltevorrichtung weist zumindest in dem in Fahrtrichtung gesehenen vorderen Bereich der Sitzfläche ein Halteelement auf. Das Halteelement ist aus einer Ruhestellung unterhalb oder in etwa in der Ebene der Sitzfläche in eine Arbeitsstellung oberhalb der Ebene der Sitzfläche in etwa orthogonal zu der Sitzfläche verbringbar und dort feststellbar.

Erfindungsgemäß ist erkannt worden, daß auf einem Fahrzeugsitz zu befördernde Gegenstände gegen Herunterrutschen bzw. Herunterfallen gesichert werden müssen. Weiter erfindungsgemäß ist erkannt worden, daß ein solches Absichern der auf einem Fahrzeugsitz abgelegten Gegenstände nicht durch umständliches Festschnallen od. dgl., sondern vielmehr durch eine eigens dafür vorgesehene Haltevorrichtung erfolgen kann. Diese Haltevorrichtung weist ein Halteelement auf, das für einen herunterrutschenden Gegenstand ein in etwa orthogonal zu dem Sitzfläche angeordnetes Hindernis darstellt, so daß der Gegenstand am Herunterrutschen gehindert ist. Ein weiterer Witz der erfindungsgemäßen Lehre ist darin zu sehen, daß die Haltevorrichtung bzw. das Halteelement bei Nutzung des Kraftfahrzeugsitzes durch einen Fahrzeuginsassen sich in einer Ruhestellung befindet, in der das Halteelement den Fahrzeuginsassen nicht stört, also den Sitzkomfort nicht negativ beeinträchtigt. Lediglich in einer Arbeitsstellung ragt das Halteelement von der Sitzfläche des Fahrzeugsitzes nach oben, so daß das Halteelement das besagte Hindernis gegen Herunterrutschen von Gegenständen bildet.

Hinsichtlich der Ausgestaltung einer besonders sicheren Haltevorrichtung ist es von Vorteil, wenn die Haltevorrichtung auch in den in Fahrtrichtung gesehen seitlichen Bereichen der Sitzfläche je ein Halteelement aufweist. Bei einer solchen Ausgestaltung ist ein Herunterrutschen von Gegenständen in die der Fahrtrichtung entgegengesetzten Richtung durch die Rückenlehne, nach vorn durch das vordere Halteelement und seitlich durch die seitlichen Halteelemente verhindert. Gegenstände liegen somit sicher auf der Sitzfläche des Kraftfahrzeugsitzes. Um nun auch höhere Gegenstände, beispielsweise Kisten od. dgl., in ihrer aufrechten Position zu sichern, ist es von Vorteil, daß zumindest im unteren Bereich der Rückenlehne eine weitere Haltevorrichtung mit entsprechenden Halteelementen vorgesehen ist. Folglich wirken die Halteelemente nicht nur im unteren Bereich, d.h. im Bereich der Sitzfläche, sondern auch etwas weiter oberhalb der Sitzfläche, nämlich im unteren Bereich der Rückenlehne.

Hinsichtlich der Anordnung der Halteelemente selbst bieten sich nun im wesentlichen zwei Möglichkeiten. Einerseits könnten die Halteelemente vor bzw. seitlich der Sitzfläche und ggf. seitlich der Rückenlehne angeordnet sein. Bei einer solchen Ausgestaltung ließe sich die Haltevorrichtung nachträglich an Kraftfahrzeugsitzen anbringen. Nachteilig könnte hier allenfalls der dadurch entstehende optische Eindruck gewertet werden.

Andererseits könnte die Haltevorrichtung bzw. könnten die Haltevorrichtungen integraler Bestandteil der Sitzfläche bzw. des Sitzes und ggf. der Rückenlehne sein. In einem solchen Falle müßte die Haltevorrichtung gleich bei der Herstellung des Kraftfahrzeugsitzes integriert werden. Insbesondere bei stets zunehmendem Sicherheitsbestreben und daher auch verschärfenden diesbezüglichen Vorschriften läßt es sich durchaus denken, daß die erfindungsgemäße Ausstattung eines Kraftfahrzeugsitzes zur Pflicht und somit zum Standard wird.

Bei einer derartigen erfindungsgemäßen Ausgestaltung ließe sich insbesondere für eine Übergangsphase auch gut vorstellen, daß mit entsprechenden Haltevorrichtungen ausgestattete Sitze - ebenso wie beheizbare Sitze - als Sonderausstattung eines Kraftfahrzeuges geliefert werden.

Im Falle der integrierten Anordnung der Haltevorrichtung sind die Halteelemente - wie das Sitzgestell - in vorteilhafter Weise gepolstert. In ihrer Ruhestellung liegen die Halteelemente in der Ebene des Sitzes und bilden dabei gemeinsam mit ihrer Polsterung Randbereiche der Sitzfläche und ggf. Randbereiche der Rückenlehne. Zum Verbringen in ihre Arbeitsstellung sind die Halteelemente gemeinsam mit ihrer Polsterung über die Ebene der Sitzfläche schiebbar oder klappbar. Das Verschieben der Halteelemente könnte sich derart vollziehen, daß der vordere Bereich der Sitzfläche und/oder die seitlichen Bereiche der Sitzfläche gemeinsam mit der Polsterung und dem vorzugsweise elastischen Stoffbezug über eine im Sitz integrierte Schiene nach oben geschoben oder über ein im Sitz integriertes Gelenk nach oben geklappt werden.

Hinsichtlich der Handhabung der Halteelemente ist es von besonderem Vorteil, wenn diese - ähnlich der Höhenverstellung oder Positionsverstellung des Sitzes - über einen Hebel betätigbar sind. Der Hebel könnte seitlich oder unterhalb des Sitzes angeordnet sein und könnte vorzugsweise über einen Umlenkmechanismus bzw. ein Gestänge an den Halteelementen vorzugsweise kniehebelmäßig angreifen. Eine Arretierung des Hebels könnte - wie bei der Positionsverstellung des Kraftfahrzeugsitzes - durch Einrastpositionen in Verbindung mit der Vorspannung einer Feder erreicht werden.

Die Halteelemente sind in vorteilhafter Weise sowohl in der Ruhestellung als auch in der Arbeitsstellung arretierbar. Um ein sicheres Verstellen bzw. Verbringen in die Arbeitsstellung zu gewährleisten, sind die Halteelemente gegen eine Vorspannung beispielsweise einer Feder od. dgl. von der einen Stellung in die andere Stellung verbringbar.

Die Betätigung der Halteelemente läßt sich in besonders vorteilhafter Weise mittels eines Motors durchführen, wobei dieser direkt mit dem Gestänge der Halteelemente wirkverbunden sein kann.

Anstelle mechanischer Halteelemente kann die Haltevorrichtung auch pneumatisch oder hydraulisch betätigbare Halteelemente dahingehend aufweisen, daß diese als in die Polsterung integrierte aufblasbare oder mit einem sonstigen Strömungsmedium füllbare Kissen, beispielsweise Luftkissen, ausgeführt sind. Diese Luftkissen könnten über eine elektrische Pumpe bzw. über einen Kompressor mit Luft füllbar und dabei in ihre Arbeitsstellung bringbar sein. Die Arbeitsstellung der Halteelemente würde dann so aussehen, daß diese bzw. die Luftkissen durch Aufblasen von der Sitzfläche als Barrieren bzw. Wülste in etwa orthogonal abragen, so daß ein Herunterrutschen von Gegenständen verhindert ist. Diese Luftkissen könnten desweiteren Absperrorgane aufweisen. Durch mechanisches oder elektrisches Betätigen der Absperrorgane wären die Luftkissen zum Halten der Luft absperrbar oder zum Ablassen der Luft bzw. zum Verbringen der Halteelemente in die Ruhestellung öffenbar.

Es gibt nun verschiedene Möglichkeiten, die Lehre der vorliegenden Erfindung in vorteilhafter Weise auszugestalten und weiterzubilden. Dazu ist einerseits auf die dem Schutzanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Darstellung einen Kraftfahrzeugsitz mit einer angedeuteten Haltevorrichtung zur Verhinderung des Herabfallens bzw. Herunterrutschens darauf abgelegter Gegenstände,
- Fig. 2: in einer Detaildarstellung ein erstes Ausführungsbeispiel des erfindungsgemäßen Kraftfahrzeugsitzes, wobei lediglich die Sitzfläche und die in ihrer Ruhestellung befindliche Kaltevorrichtung dargestellt sind,
- Fig. 3: in einer schematischen Darstellung den Gegenstand aus Fig. 2, wobei sich die Haltevorrichtung in ihrer Arbeitsstellung befindet,
- Fig. 4: ein zweites Ausführungsbeispiel des erfindungsgemäßen Kraftfahrzeugsitzes, wobei hier - wie in Fig. 2 - lediglich die Sitzfläche und die in ihrer Ruhestellung befindliche Haltevorrichtung dargestellt sind,
- Fig. 5: in einer schematischen Darstellung den Gegenstand aus Fig. 4, wobei sich die Haltevorrichtung in ihrer Arbeitsstellung befindet,
- Fig. 6: in einer schematischen Darstellung ein drittes Ausführungsbeispiel des erfindungsgemäßen Kraftfahrzeugsitzes, wobei die Haltevorrichtung bzw. die Halteelemente als Luftkissen ausgeführt und in ihrer Ruhe-stellung dargestellt sind und
- Fig. 7: in einer schematischen Darstellung den Gegenstand aus Fig. 6, wobei sich die Haltevorrichtung in ihrer Arbeitstellung befindet.

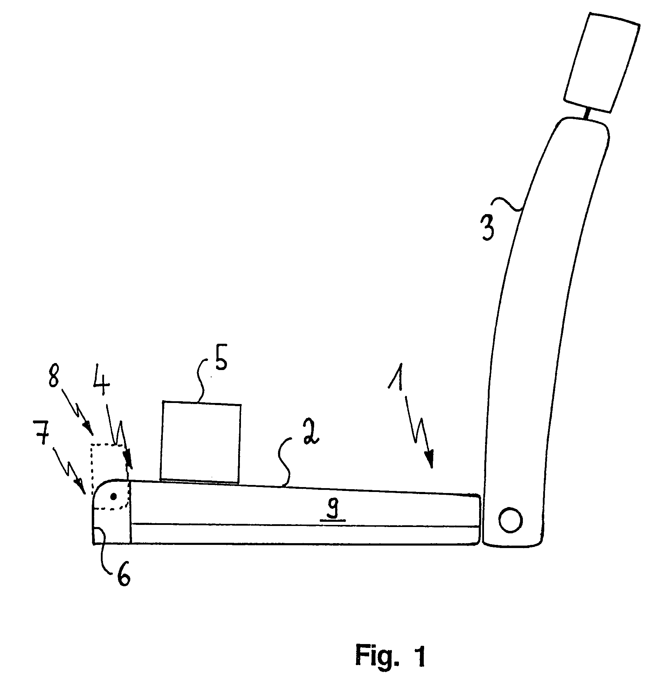

Fig. 1 zeigt in einer schematischen Darstellung einen Kraftfahrzeugsitz mit einem Sitzgestell 1, wobei das Sitzgestell 1 vorzugsweise gepolstert ist und eine Sitzfläche 2 sowie eine Rückenlehne 3 bildet.

Erfindungsgemäß ist zumindest der Sitzfläche 2 eine Haltevorrichtung 4 zur Verhinderung des Herabfallens bzw. Herunterrutschens darauf abgelegter Gegenstände 5 zugeordnet. Die Haltevorrichtung 4 weist in dem in Fahrtrichtung gesehen vorderen Bereich der Sitzfläche 2 ein Halteelement 6 auf, das aus einer Ruhestellung 7 unterhalb oder in etwa in der Ebene der Sitzfläche 2 in eine Arbeitsstellung 8 oberhalb der Ebene der Sitzfläche 2 orthogonal zu der Sitzfläche 2 verbringbar und dort feststellbar ist.

In Fig. 1 ist lediglich schematisch dargestellt, daß die Haltevorrichtung 4 auch in den in Fahrtrichtung gesehen seitlichen Bereichen der Sitzfläche 2 je ein Halteelement 9 aufweist.

Die Halteelemente 6, 9 können vor bzw. seitlich der Sitzfläche 2 angeordnet sein. Ebenso kann die Haltevorrichtung bzw. können die Halteelemente 6, 9 integraler Bestandteil der Sitzfläche 2 sein.

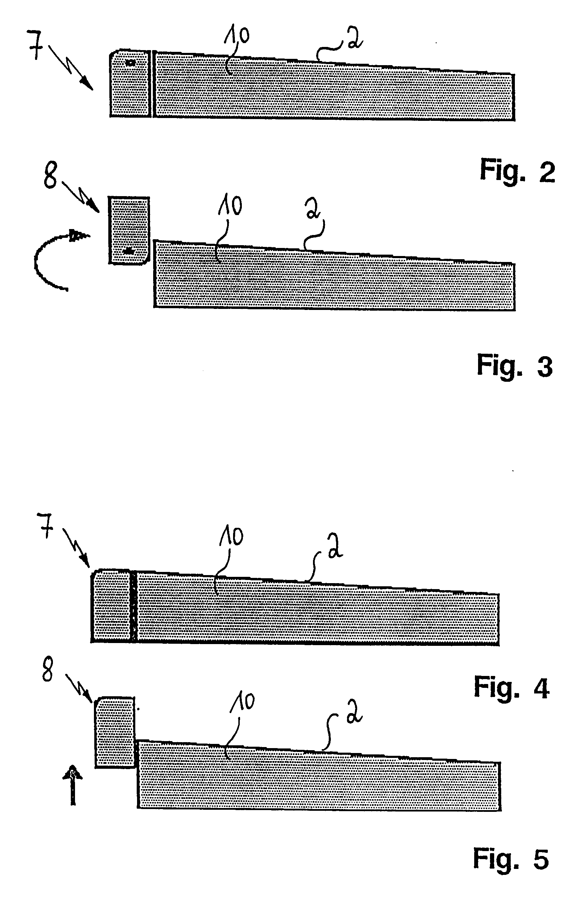

Die Fig. 2 bis 7 zeigen andeutungsweise, daß die Halteelemente 6, 9 - wie das Sitzgestell 1 - gepolstert sind. Sie befinden sich in ihrer Ruhestellung 7 in der Ebene des Sitzes bzw. der Sitzfläche 2 und bilden dabei gemeinsam mit ihrer Polsterung 10 Randbereiche der Sitzfläche 2. Zum Verbringen in ihre Arbeitsstellung 8 sind die Halteelemente 6, 9 orthogonal über die Ebene der Sitzfläche 2 schiebbar (Fig. 4, 5) oder klappbar (Fig. 2, 3).

In den Figuren ist nicht dargestellt, daß die Halteelemente 6, 9 über einen Hebel betätigbar sind. Der Hebel ist entweder seitlich oder unterhalb des Sitzes angeordnet und vorzugsweise über einen Umlenkmechanismus bzw. ein Gestänge an den Halteelementen vorzugsweise kniehebelmäßig angreifend angeordnet. Die Halteelemente sind sowohl in der Ruhestellung als auch in der Arbeitsstellung arretierbar und gegen eine Vorspannung od. dgl. von der einen Stellung in die andere Stellung verbringbar. Die Betätigung der Halteelemente kann mittels eines Motors erfolgen.

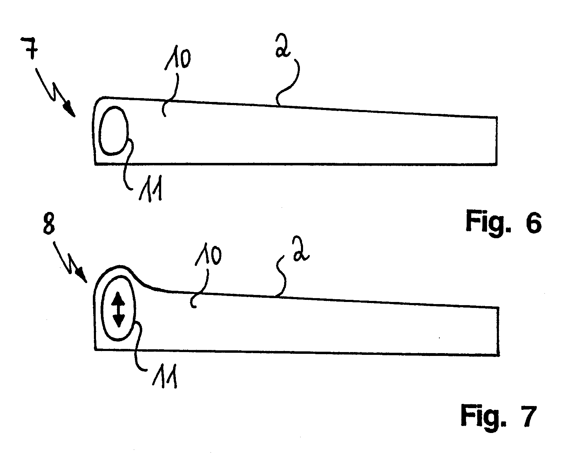

Die Fig. 6 und 7 zeigen ein weiteres Ausführungsbeispiel des erfindungsgemäßen Kraftfahrzeugsitzes. Danach sind die Haltelemente 6, 9 als in die Polsterung integrierte aufblasbare Luftkissen 11 ausgeführt. Die Luftkissen 11 sind beispielsweise über eine elektrische Pumpe bzw. über einen Kompressor mit Luft füllbar und dabei in ihre Arbeitsstellung 8 bringbar. Desweiteren sind Absperrorgane vorgesehen, wobei durch mechanisches oder elektrisches Betätigen der Absperrorgane die Luftkissen 11 zum Halten der Luft absperrbar oder zum Ablassen der Luft bzw. zum Verbringen in die Ruhestellung 7 öffenbar sind.

Abschließend sei hervorgehoben, daß die voranstehende Erläuterung von Ausführungsbeispielen lediglich die erfindungsgemäße Lehre erörtern soll, diese jedoch nicht auf die Ausführungsbeispiele einschränkt. Der erfindungsgemäße Witz, nämlich eine Haltevorrichtung zur Verhinderung des Abrutschens von Gegenständen von einem Kraftfahrzeugsitz zu schaffen, läßt sich im Lichte des Patentanspruches 1 durch jegliche diesbezügliche konstruktive Maßnahmen realisieren.

## Patentansprüche

1. Kraftfahrzeugsitz mit einem Sitzgestell (1), wobei das Sitzgestell (1) vorzugsweise gepolstert ist und eine Sitzfläche (2) sowie eine Rückenlehne (3) bildet,
**dadurch gekennzeichnet**, daß zumindest der Sitzfläche (2) eine Haltevorrichtung (4) zur Verhinderung des Herabfallens bzw. Herunterrutschens darauf abgelegter Gegenstände (5) zugeordnet ist und daß die Haltevorrichtung (4) zumindest in dem in Fahrtrichtung gesehen vorderen Bereich der Sitzfläche ein Halteelement (6) aufweist, das aus einer Ruhestellung (7) unterhalb oder in etwa in der Ebene der Sitzfläche (2) in eine Arbeitsstellung (8) oberhalb der Ebene der Sitzfläche (2) in etwa orthogonal zu der Sitzfläche (2) verbringbar und dort feststellbar ist.

2. Kraftfahrzeugsitz nach Anspruch 1, dadurch gekennzeichnet, daß die Haltevorrichtung (4) auch in den in Fahrtrichtung gesehen seitlichen Bereichen der Sitzfläche (2) je ein Halteelement (9) aufweist.

3. Kraftfahrzeugsitz nach Anspruch 1 oder 2, dadurch gekennzeichnet, daß zumindest im unteren Bereich der Rückenlehne (3) eine weitere Haltevorrichtung (4) mit entsprechenden Halteelementen (6, 9) vorgesehen ist.

4. Kraftfahrzeugsitz nach einem der Ansprüche 1 bis 3, dadurch gekennzeichnet, daß die Halteelemente (6, 9) vor bzw. seitlich der Sitzfläche (2) und ggf. seitlich der Rückenlehne (3) angeordnet sind.

5. Kraftfahrzeugsitz nach einem der Ansprüche 1 bis 3, dadurch gekennzeichnet, daß die Haltevorrichtung (4) bzw. die Haltevorrichtungen (4) integraler Bestandteil der Sitzfläche (2) bzw. des Sitzes und ggf. der Rückenlehne (3) ist bzw. sind.

6. Kraftfahrzeugsitz nach Anspruch 5, dadurch gekennzeichnet, daß die Halteelemente (6, 9) - wie das Sitzgestell (2) - gepolstert sind, in ihrer Ruhestellung (7) in der Ebene des Sitzgestells (2) liegen und dabei gemeinsam mit ihrer Polsterung (10) Randbereiche der Sitzfläche (2) und ggf. der Rückenlehne (3) bilden und in ihre Arbeitsstellung - gemeinsam mit ihrer Polsterung (10) - über die Ebene der Sitzfläche (2) schiebbar oder klappbar sind.

7. Kraftfahrzeugsitz nach einem der Ansprüche 1 bis 6 dadurch gekennzeichnet, daß die Halteelemente (9) über einen Hebel betätigbar sind, daß der Hebel seitlich oder unterhalb des Sitzes angeordnet ist und vorzugsweise über einen Umlenkmechanismus bzw. ein Gestänge an den Halteelementen vorzugsweise kniehebelmäßig angreift.

8. Kraftfahrzeugsitz nach einem der Ansprüche 1 bis 7, dadurch gekennzeichnet, daß die Halteelemente (6, 9) sowohl in der Ruhestellung (7) als auch in der Arbeitsstellung (8) arretierbar sind und gegen eine Vorspannung beispielsweise einer Feder oder dgl. von der einen Stellung in die andere Stellung verbringbar sind.

9. Kraftfahrzeugsitz nach Anspruch 7 oder 8, dadurch gekennzeichnet, daß die Halteelemente (6, 9) mittels eines Motors betätigbar sind.

10. Kraftfahrzeugsitz nach einem der Ansprüche 1 bis 5, dadurch gekennzeichnet, daß die Halteelemente (6, 9) als in die Polsterung (10) integrierte, aufblasbare Luftkissen (11) ausgeführt sind.

11. Kraftfahrzeugsitz nach Anspruch 10, dadurch gekennzeichnet, daß die Luftkissen (11) über eine elektrische Pumpe bzw. über einen Kompressor mit Luft füllbar und dabei in ihre Arbeitsstellung (8) bringbar sind, Absperrorgane aufweisen und durch mechanisches oder elektrisches Betätigen der Absperrorgane zum Halten der Luft absperrbar oder zum Ablassen der Luft bzw. zum Verbringen in die Ruhestellung (7) öffenbar sind.

## Claims

1. Motor vehicle seat having a seat frame (1), the seat frame (1) preferably being upholstered and forming a seat surface (2) and a back-rest (3),
characterized in that associated at least with the seat surface (2) is a retaining device (4) for preventing articles (5) deposited on said surface from falling or sliding off and that the retaining device (4) at least in the, viewed in travelling direction, front region of the seat surface comprises a retaining element (6), which is movable substantially orthogonally relative to the seat surface (2) out of a position of rest (7) below or approximately in the plane of the seat surface (2) into a working position (8) above the plane of the seat surface (2) and is lockable in said position.

2. Motor vehicle seat according to claim 1, characterized in that the retaining device (4) also comprises a retaining element (9) in each of the, viewed in travelling direction, lateral regions of the seat surface (2).

3. Motor vehicle seat according to claim 1 or 2, characterized in that a further retaining device (4) with corresponding retaining elements (6, 9) is provided at least in the bottom region of the back-rest (3).

4. Motor vehicle seat according to one of claims 1 to 3, characterized in that the retaining elements (6, 9) are disposed in front of and laterally of the seat surface (2) and possibly laterally of the back-rest (3).

5. Motor vehicle seat according to one of claims 1 to 3, characterized in that the retaining device (4) or the retaining devices (4) is/are an integral part of the seat surface (2) or of the seat and possibly of the back-rest (3).

6. Motor vehicle seat according to claim 5, characterized in that the retaining elements (6, 9) - like the seat frame (2) - are upholstered, in their position of rest (7) lie in the plane of the seat frame (2) and in so doing form jointly with their upholstery (10) edge regions of the seat surface (2) and possibly of the back-rest (3) and are slidable or foldable - jointly with their upholstery (10) - above the plane of the seat surface (2) into their working position.

7. Motor vehicle seat according to one of claims 1 to 6, characterized in that the retaining elements (9) are operable by means of a lever, that the lever is disposed laterally of or below the seat and acts preferably via a deflection mechanism or a linkage preferably in the manner of a toggle lever upon the retaining elements.

8. Motor vehicle seat according to one of claims 1 to 7, characterized in that the retaining elements (6, 9) are arrestable both in the position of rest (7) and in the working position (8) and are movable counter to a prestressing of, for example, a spring or the like from the one position into the other position.

9. Motor vehicle seat according to claim 7 or 8, characterized in that the retaining elements (6, 9) are operable by means of a motor.

10. Motor vehicle seat according to one of claims 1 to 5, characterized in that the retaining elements (6, 9) take the form of inflatable air cushions (11) which are integrated into the upholstery (10).

11. Motor vehicle seat according to claim 10, characterized in that the air cushions (11) are fillable with air and in the process movable into their working position (8) by means of an electric pump or by means of a compressor, comprise shut-off devices and through mechanical or electrical operation of the shut-off devices are closable to retain the air or openable to release the air and move into the position of rest (7).

## Revendications

1. Siège de voiture avec une carcasse (1), dans lequel la carcasse (1) est de préférence rembourrée et constitue une surface de siège (2) ainsi qu'un dossier (3),
caractérisée en ce qu'au moins à la surface de siège (2) il est associé un dispositif de support (4) pour empêcher la chute ou le glissement suivi d'une chute d'objets (5) qui y sont déposés et en ce que le dispositif de support (4) tout au moins dans la zone antérieure de la surface de siège, vue dans le sens de la circulation de la voiture, présente un élément de retenue (6), qui depuis une position de repos (7) au-dessous de ou sensiblement dans le plan de la surface de siège (2) peut être mû vers une position de travail (8) au-dessus du plan de la surface de siège et sensiblement orthogonalement par rapport à la surface de siège, et peut être verrouillé dans cette position de travail.

2. Siège de voiture suivant la revendication 1, caractérisé en ce que le dispositif de support (4) présente des éléments de retenue (9) également de part et d'autre dans les zones latérales de la surface de siège (2) considérées dans le sens de circulation du véhicule.

3. Siège de voiture suivant la revendication 1 ou la revendication 2, caractérisé en ce qu'au moins dans la zone inférieure du dossier (3) est prévu un dispositif de support (4) supplémentaire avec des éléments de retenue (5, 9) correspondants.

4. Siège de voiture suivant l'une quelconque des revendications de 1 à 3, caractérisé en ce que les éléments de retenue (6, 9) sont disposés devant ou latéralement de la surface de siège (2) et le cas échéant latéralement du dossier (3).

5. Siège de voiture suivant l'une quelconque des revendications de 1 à 3, caractérisé en ce que le dispositif de support (4) ou les dispositifs de support (4) fait ou font partie intégrante de la surface de siège (2) ou du siège et le cas échéant du dossier (3).

6. Siège de voiture suivant la revendication 5, caractérisé en ce que les éléments de retenue (5, 9) - tout comme la carcasse (2) - sont rembourrés, sont dans leur position de repos (7) situés dans le plan de la carcasse (2) et constituent alors conjointement avec leur rembourrage (10) des zones marginales de la surface de siège (2) et le cas échéant du dossier (3) et peuvent, dans leur position de travail - conjointement avec leur rembourrage (10) - être glissés ou être rabattus sur le plan de la surface de siège (2).

7. Siège de voiture suivant l'une quelconque des revendications de 1 à 6, caractérisé en ce que les éléments de retenue (9) peuvent être actionnés à l'aide d'un levier, en ce que le levier est disposé latéralement ou au-dessous du siège et agit sur les éléments de retenue de préférence à la manière d'un levier à genouillère par l'intermédiaire d'un mécanisme de renvoi ou d'un tringlage.

8. Siège de voiture suivant l'une quelconque des revendications de 1 à 7, caractérisé en ce que les éléments de retenue (6, 9) peuvent être verrouillés tant dans la position de repos (7) que dans la position de travail (8) et peuvent être mus d'une position à l'autre à l'encontre de l'action d'une précontrainte exercée par exemple par un ressort ou similaire.

9. Siège de voiture suivant la revendication 7 ou la revendication 8, caractérisé en ce que les éléments de retenue (5, 9) peuvent être actionnés à l'aide d'un moteur.

10. Siège de voiture suivant l'une quelconque des revendications de 1 à 5, caractérisé en ce que les éléments de retenue (6, 9) ont la forme de coussins d'air gonflables (11) intégrés dans le rembourrage.

11. Siège de voiture suivant la revendication 10, caractérisé en ce que les coussins d'air (11) peuvent être gonflés d'air à l'aide d'une pompe électrique ou d'un compresseur et peuvent de la sorte être mus dans leur position de travail (8), présentent des organes d'obturation et peuvent par la commande mécanique ou électrique des organes d'obturation être obturés aux fins de la retenue de l'air ou être évacués d'air pour obtenir la position de repos (7).
